# EUROPEAN PATENT SPECIFICATION

(11) **EP 4 563 600 B1**
(45) Date of publication and mention of the grant of the patent: **02.09.2026**
(21) Application number: 22952247.9
(22) Date of filing: 26.07.2022
(51) Int. Cl.: C08F 14/00, C08F 18/00, C08F 14/28, C08F 210/08, C08F 214/28, C08F 228/02, C08F 14/26, C08F 214/26

(54) **NON-FLUOROSURFACTANT, PREPARATION METHOD THEREFOR, AND USE THEREOF**
NICHTFLUORTENSID, HERSTELLUNGSVERFAHREN DAFÜR UND VERWENDUNG DAVON
TENSIOACTIF NON FLUORÉ, SON PROCÉDÉ DE PRÉPARATION ET SON UTILISATION

(43) Date of publication of application: 04.06.2025
(73) Proprietor: Zhonghao Chenguang Research Institute of Chemical Industry Co., Ltd., Zigong, Sichuan 643201 (CN)
(72) Inventor: XIAO, Zhongliang, Zigong, Sichuan 643201 (CN); LIU, Bo, Zigong, Sichuan 643201 (CN); YU, Jinlong, Zigong, Sichuan 643201 (CN); ZHONG, Ziqiang, Zigong, Sichuan 643201 (CN); LIN, Zhoujun, Zigong, Sichuan 643201 (CN); CHEN, Liyi, Zigong, Sichuan 643201 (CN); LI, Hui, Zigong, Sichuan 643201 (CN); YE, Feiyang, Zigong, Sichuan 643201 (CN); ZHANG, Tingjian, Zigong, Sichuan 643201 (CN)
(74) Representative: Haseltine Lake Kempner LLP
(86) International application number: PCT/CN2022/107935
(87) International publication number: WO 2024/020782

(56) References cited:
- EP-A1- 0 609 849
- WO-A1-2021/131996
- CN-A- 101 787 091
- CN-A- 109 715 684
- CN-A- 114 127 131
- JP-A- 2015 199 944
- US-A1- 2009 221 776
- US-A1- 2021 108 008

## Description

### FIELD OF THE INVENTION

The present application belongs to the technical field of chemical synthesis, and specifically relates to non-fluorosurfactant, preparation method therefor and use thereof.

### BACKGROUND OF THE INVENTION

Fluoropolymers have excellent heat resistance, chemical resistance, durability and weather resistance, etc. They are widely used in the fields such as chemical, petroleum, textile, food, paper, medicine, electronics and machinery. Such polymers mainly include polytetrafluoroethylene (PTFE), polyvinylidene fluoride (PVDF), polychlorotrifluoroethylene (PCTFE), polyvinyl fluoride (PVF), fluorinated ethylene propylene (FEP), and meltable polytetrafluoroethylene (PFA).

At present, industrial production of fluoropolymer is prepared by aqueous emulsion polymerization mainly using perfluorooctyl carboxylate (PFOA), perfluorooctyl sulfonate (PFOS) or derivatives thereof as surfactants. These two surfactants are organic pollutants found to be the most difficult to degrade in the world to date, they persist in the surrounding environment for a long time and have high bioaccumulation, and they are gradually banned by environmental protection organizations around the world. Many countries have done a lot of work and made great progress in developing new fluorocarbon surfactant to replace PFOS and PFOA. For example, CN103073410A discloses a method for the preparation of a fluoroether carboxylic acid surfactant, wherein of a fluoroether carboxylic acid is produced by the generation of a fluoroether acyl chloride and a fluoroether acyl fluoride via an ultraviolet light-initiated photochemical reaction of a fluoro-olefin monomer and oxygen, followed by hydrolysis. Patent CN114031762A discloses a preparation process of perfluoropolyether surfactant and the perfluoropolyether surfactant, in which a crude product is first obtained by photochemical reaction using hexafluoropropylene, chlorotrifluoroethylene, and oxygen, and then a perfluoropolyether surfactant is obtained by de-peroxygenation, hydrolysis, and neutralization.

However, the fluoropolymer produced with the above surfactants still has residual fluorine compound and is still bioaccumulative to a certain extent, which is not in line with the requirements of the development of green chemistry. Recently, international fluorine chemical giants Solvay and DuPont have announced the accelerated phase-out of fluorosurfactant to completely solve the problem of bioaccumulation of fluorosurfactant. Therefore, it is urgent to carry out research on non-fluorosurfactant. US 2009/221776 A1 discloses a process for preparing a fluoropolymer in an aqueous reaction medium comprising:
a) forming an aqueous emulsion comprising at least one radical initiator, at least one non-fluorinated surfactants, and at least one monomer selected from the group consisting of vinylidene fluoride, tetrafluoroethylene, trifluoroethylene, hexafluoropropene, chlorotrifluoroethylene, vinyl fluoride, and combinations thereof, and
b) initiating polymerization of said monomer, wherein said non-fluorinated surfactant is selected from the group consisting of polyvinyl phosphonic acid, polyacrylic acid, polyvinyl sulfonic acid, and the salts thereof.

### SUMMARY OF THE INVENTION

In view of the deficiencies of the related technology, an object of the present invention is to provide a non-fluorosurfactant, a preparation method therefor and use thereof. This non-fluorosurfactant has a good effect of lowering the surface tension of an aqueous phase system and can be used in place of fluorosurfactant for the preparation of fluoropolymer by aqueous emulsion polymerization.

To achieve this, the present invention utilizes the following technical solutions.

In a first aspect, the present invention provides a non-fluorosurfactant, and the non-fluorosurfactant is a polymer comprising the following structural units in its main chain: 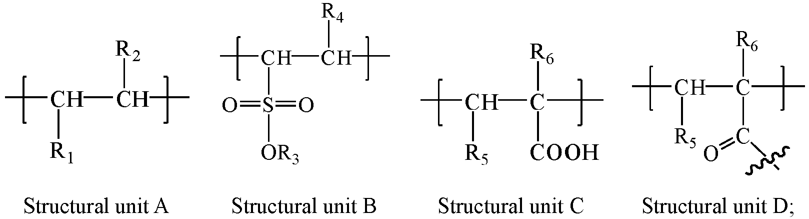
wherein, the structural units D are connected to each other via 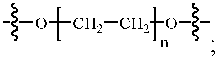
R₁, R₂, R₄, R₅, and R₆ are each independently a hydrogen atom or C₁-C₃ alkyl group;
R₃ is a hydrogen atom, NH₄⁺ or a monovalent metal ion; and
n is an integer from 10 to 150 (e.g., it may be 10, 15, 20, 30, 40, 50, 60, 80, 100, 120, 130, or 150, etc.).

In the present invention, 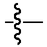 represents a connecting bond of a group.

In the present invention, the "non-fluoro" means free of fluorine. The structural formula of the non-fluorosurfactant provided according to the present invention is shown in the following formula I:

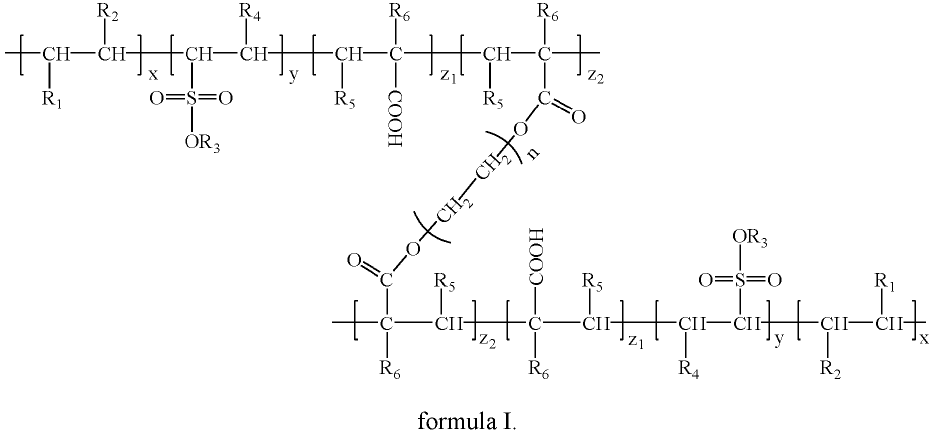

It should be noted that since a copolymer formed by the polymerization of a variety of monomers has different bonding manners such as alternating copolymerization, random copolymerization and block copolymerization, as well as different stereo configurations, which cannot be represented by a structural formula, formula I is only used to illustrate which structural units the molecular chain of the non-fluorosurfactant is composed of, and does not represent the real structure of the non-fluorosurfactant.

In some embodiments of the present invention, R₁, R₂, R₄, R₅, and R₆ are each independently a hydrogen atom, methyl, or ethyl.

In some embodiments of the present invention, the structural unit A, structural unit B, structural unit C, and structural unit D have a molar ratio of (1.0 to 1.6):(1.2 to 1.5):1:(0.2 to 0.6).

In some embodiments of the present invention, the non-fluorosurfactant has a molecular weight of 200,000 to 800,000; for example, the molecular weight may be 200,000, 250,000, 300,000, 350,000, 400,000, 450,000, 500,000, 550,000, 600,000, 650,000, 700,000, 750,000, or 800,000, etc.

In some embodiments of the present invention, the monovalent metal ion is a sodium ion or a potassium ion.

In a second aspect, the present invention provides a preparation method for a non-fluorosurfactant as described in the first aspect, and the preparation method comprises the following steps:
reacting compounds 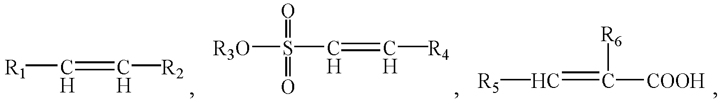 and polyethylene glycol as raw materials in water in the presence of an initiator, to produce the non-fluorosurfactant.

Wherein, polyethylene glycol (PEG) has a structural formula of 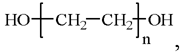 which links structural units D by esterification reaction with a carboxyl group. The polyethylene glycol employed in the present invention may be PEG-400, PEG-800, PEG-1000, PEG-2000, or PEG-4000, etc.

In some embodiments of the invention, the initiator is selected from one or more of ammonium persulfate, sodium persulfate, potassium persulfate, di-tert-butyl peroxide, and dibenzoyl peroxide.

In some embodiments of the present invention, the initiator is used in an amount of 0.1 to 0.5%, for example 0.1%, 0.15%, 0.2%, 0.25%, 0.3%, 0.35%, 0.4%, 0.45%, or 0.5%, etc., of the total mass of the compounds 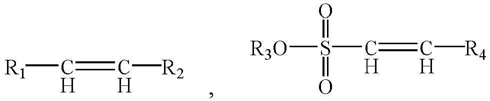 and 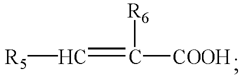 for example.

In some embodiments of the present invention, the compound 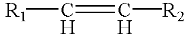 and polyethylene glycol are fed by one-time addition, and the compounds 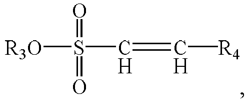 and 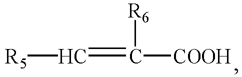 and the initiator are fed by dropwise addition in the form of an aqueous solution.

In some embodiments of the present invention, the dropwise addition is carried out for 0.5 to 1.5 h; for example, the time may be 0.5 h, 0.6 h, 0.8 h, 1 h, 1.2 h, 1.3 h, or 1.5 h, etc.

In some embodiments of the present invention, the reacting is carried out at a temperature of 60 to 120°C; for example, the temperature may be 60°C, 70°C, 80°C, 90°C, 100°C, 110°C, or 120°C, etc.

In some embodiments of the present invention, the reacting is carried out for 4 to 10 h; for example, the time may be 4 h, 5 h, 6 h, 7 h, 8 h, 9 h, or 10 h, etc.

It is to be noted that in the present invention when the feed is carried out by means of dropwise addition, the time of the reacting of 4 to 10 h does not include the time of dropwise addition.

In some embodiments of the present invention, the preparation method for the non-fluorosurfactant may further comprise a purification operation to obtain a pure non-fluorosurfactant product.

The present invention has no particular limitations on the method of purification. Exemplarily, the purification may be carried out according to the following steps: after the reaction is complete, the lower organic phase solution is separated, and chloroform is added to obtain a mixed solution; the mixed solution is washed with saturated aqueous sodium sulfite, saturated brine, and deionized water, respectively, and separated to obtain a second organic phase solution; then the second organic phase solution is dried over anhydrous sodium sulfate; and finally, the non-fluorosurfactant is obtained via filtration and rotary evaporation.

In a third aspect, the present invention provides use of the non-fluorosurfactant as described in the first aspect in the preparation of fluoropolymer by aqueous emulsion polymerization.

In a fourth aspect, the present invention provides a preparation method for a fluoropolymer, the preparation method comprises: subjecting a fluorine-containing monomer to aqueous emulsion polymerization in an aqueous phase comprising the non-fluorosurfactant as described in the first aspect to produce the fluoropolymer.

In some embodiments of the present invention, the fluorine-containing monomer is selected from one or more of tetrafluoroethylene, hexafluoropropylene, vinyl fluoride, vinylidene fluoride, trifluoroethylene, and chlorotrifluoroethylene.

In some embodiments of the present invention, the non-fluorosurfactant is used in an amount of 0.008 to 0.2%, for example 0.008%, 0.01%, 0.02%, 0.03%, 0.05%, 0.06%, 0.08%, 0.1%, 0.12%, 0.13%, 0.15%, 0.16%, 0.18%, or 0.2%, etc., of the mass of the fluoropolymer.

The present invention has the following beneficial effects as compared to related technologies:
The non-fluorosurfactant provided according to the present invention has a good effect of lowering the surface tension of an aqueous phase system, and can dramatically lower the surface tension of the aqueous phase at a lower concentration. The non-fluorosurfactant is more environmentally friendly than a fluorosurfactant, and can be used in place of fluorosurfactant for the preparation of fluoropolymer by aqueous emulsion polymerization, and the prepared fluoropolymer emulsion is stable without demulsification.

### DETAILED DESCRIPTION OF THE EMBODIMENTS

The technical solution of the present invention is further described below by way of specific embodiments. It should be apparent to those skilled in the art that the specific embodiments described are merely an aid to understanding the invention and should not be regarded as a specific limitation of the invention.

### Example 1

This example provides a non-fluorosurfactant, which is prepared as follows:
500 mL of deionized water and 1600 g of polyethylene glycol 800 were added to a 5 L high-pressure reactor, and 896 g of CH₃CH₂CH=CH₂ was charged into the reactor after three nitrogen displacements. A monomer solution (360 g of sodium vinylsulfonate and 860 g of CH₃CH=CHCOOH dissolved in 500 mL of deionized water) and an initiator solution (8 g of ammonium persulfate dissolved in 100 mL of deionized water) were added to the reactor simultaneously and slowly using a metering pump at 80°C, and the addition was controlled to be completed within 1 h. After the feeding was completed, the reaction was carried out at 120°C for 4 h. After the reaction was complete, the unreacted gas was discharged, and the lower organic phase solution was separated using a partition funnel, and 500 mL of chloroform was added to the organic phase to obtain a mixed solution; the mixed solution was washed with saturated aqueous sodium sulfite, saturated brine, and deionized water, respectively, and separated to obtain an organic phase solution; then the resulting organic phase solution was dried over anhydrous sodium sulfate; and finally, after filtration and rotary evaporation, the non-fluorosurfactant D1 was obtained, and its number average molecular weight was measured to be 320000, and its HLB value was 17.5.

### Example 2

This example provides a non-fluorosurfactant, which is prepared as follows:
500 mL of deionized water and 3200 g of polyethylene glycol 800 were added to a 5 L high-pressure reactor, and 336 g of ethylene was charged into the reactor after three nitrogen displacements. A monomer solution (2175 g of sodium 1-methylethenylsulfonate and 710 g of acrylic acid dissolved in 500 mL of deionized water) and an initiator solution (16 g of sodium persulfate dissolved in 100 mL of deionized water) were added to the reactor simultaneously and slowly using a metering pump at 80°C, and the addition was controlled to be completed within 1 h. After the feeding was completed, the reaction was carried out at 100°C or 6 h. of After the reaction was complete, the unreacted gas was discharged, and the lower organic phase solution was separated using a partition funnel, and 500 mL of chloroform was added to the organic phase to obtain a mixed solution; the mixed solution was washed with saturated aqueous sodium sulfite, saturated brine, and deionized water, respectively, and separated to obtain an organic phase solution; then the resulting organic phase was dried over anhydrous sodium sulfate; and finally, after filtration and rotary evaporation, the non-fluorosurfactant D2 was obtained, and its number average molecular weight was measured to be 210000, and its HLB value was 16.4.

### Example 3

This example provides a non-fluorosurfactant, which is prepared as follows:
500 mL of deionized water and 2000 g of polyethylene glycol 2000 were added to a 5 L high-pressure reactor, and 710 g of CH₃CH=CHCH₂CH₃ was charged into the reactor after three nitrogen displacements. The monomer solution (1896 g of sodium 1-methacrylenesulfonate and 710 g of acrylic acid dissolved in 500 mL of deionized water) and an initiator solution (4 g of potassium persulfate dissolved in 100 mL of deionized water) were added to the reactor simultaneously and slowly using a metering pump at 80°C, and the addition was controlled to be completed within 1 h. After the feeding was completed, the reaction was carried out at 110°C for 5 h. After the reaction was complete, the unreacted gas was discharged, and the lower organic phase solution was separated using a partition funnel, and 500 mL of chloroform was added to the organic phase to obtain a mixed solution; the mixed solution was washed with saturated aqueous sodium sulfite, saturated brine, and deionized water, respectively, and separated to obtain an organic phase solution; then the resulting organic phase solution was dried over anhydrous sodium sulfate; and finally, after filtration and rotary evaporation, the non-fluorosurfactant D3 was obtained, and its number average molecular weight was measured to be 550000, and its HLB value was 15.9.

### Example 4

This example provides a non-fluorosurfactant, which is prepared as follows:
500 mL of deionized water and 8000 g of polyethylene glycol 4000 were added to a 5 L high-pressure reactor, and 784 g of CH₃CH₂CH=CH₂ was charged into the reactor after three nitrogen displacements. A monomer solution (1898 g of potassium vinyl sulfonate and 1000 g of CH₃CH₂CH=CH-COOH dissolved in 500 mL of deionized water) and 7 g of di-tert-butyl peroxide initiator were added to the reactor simultaneously and slowly using a metering pump at 80°C, and the addition was controlled to be completed in 1 h. After the feeding was completed, the reaction was carried out at 120°C for 4 h. of After the reaction was complete, the unreacted gas was discharged, and the lower organic phase solution was separated using a partition funnel, and 500 mL of chloroform was added to the organic phase to obtain a mixed solution; the mixed solution was washed with saturated aqueous sodium sulfite, saturated brine, and deionized water, respectively, and separated to obtain an organic phase solution; then the resulting organic phase solution was dried over anhydrous sodium sulfate; and finally, after filtration and rotary evaporation, the non-fluorosurfactant D4 was obtained, and its number average molecular weight was measured to be 460000, and its HLB value was 18.3.

### Application Examples 1 to 4

In Application Examples 1 to 4, polyfluorinated ethylene propylene was prepared using the non-fluorosurfactants provided in Examples 1 to 4, respectively, by the following steps:
30 kg of deionized water was added into a 50 L reactor, the reactor was vacuumed and replaced with N₂ until the oxygen content was ≤ 30ppm. 1.8 g of the respective non-fluorosurfactant provided in Examples 1 to 4 was added to the reactor respectively, the reactor was heated to 80°C, the initial mixed monomer of tetrafluoroethylene and hexafluoropropylene (the volume ratio of tetrafluoroethylene to hexafluoropropylene was 32:68) was charged until the pressure inside the reactor reached 3.5 Mpa, 20 g of ammonium persulfate dissolved in 100 mL of water was added, and the pressure inside the reactor was controlled to 3.8 MPa by supplementing the mixed monomer of tetrafluoroethylene and hexafluoropropylene (the volume ratio of tetrafluoroethylene to hexafluoropropylene was 96:4), and the reaction was terminated when the solid content of the emulsion reached 30%, to yield polyfluorinated ethylene propylene emulsion, and no signs of condensation or sedimentation of the emulsion were observed.

Emulsion stability test: the test was carried out according to GB/T1603-2001 test standards, and the test results are shown in Table 1.

**Table 1. Results of Emulsion stability test**

| No. | Surfactant | Emulsion stabilization time/s |
|---|---|---|
| Application Example 1 | D1 | 420± 8 |
| Application Example 2 | D2 | 450± 6 |
| Application Example 3 | D3 | 460± 10 |
| Application Example 4 | D4 | 430± 8 |

As can be seen from the state of the emulsions prepared in Application Examples 1 to 4 and the test results in Table 1, the non-fluorosurfactant provided according to the present invention can be used in the aqueous emulsion polymerization of fluoropolymer and the emulsion formed therefrom was well stabilized.

## Claims

1. A non-fluorosurfactant, **characterized in that** the non-fluorosurfactant is a polymer containing the following structural units in its main chain: 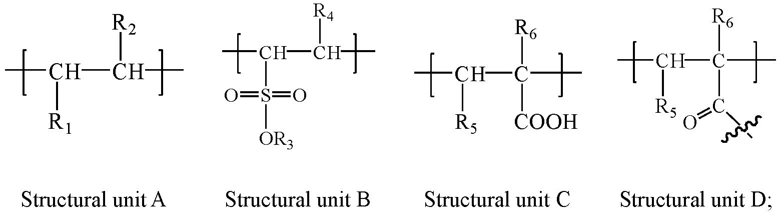
wherein, the structural units D are connected to each other via 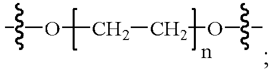
R₁, R₂, R₄, R₅, and R₆ are each independently a hydrogen atom or C₁-C₃ alkyl group;
R₃ is a hydrogen atom, NH₄⁺ or a monovalent metal ion; and
n is an integer from 10 to 150.

2. The non-fluorosurfactant according to claim 1, wherein, R₁, R₂, R₄, R₅, and R₆ are each independently a hydrogen atom, methyl, or ethyl.

3. The non-fluorosurfactant according to claim 1 or 2, wherein, the structural unit A, structural unit B, structural unit C, and structural unit D have a molar ratio of (1.0 to 1.6):(1.2 to 1.5):1:(0.2 to 0.6).

4. The non-fluorosurfactant according to any one of claims 1 to 3, wherein, the non-fluorosurfactant has a number average molecular weight of 200,000 to 800,000.

5. The non-fluorosurfactant according to any one of claims 1 to 4, wherein, the monovalent metal ion is a sodium ion or a potassium ion.

6. A preparation method for the non-fluorosurfactant according to any one of claims 1 to 5, **characterized in that** the preparation method comprises the following steps:
reacting compounds 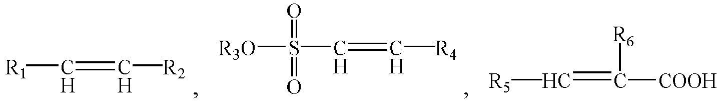 and polyethylene glycol as raw materials in water in the presence of an initiator, to produce the non-fluorosurfactant.

7. The preparation method according to claim 6, wherein, the initiator is selected from one or more of ammonium persulfate, sodium persulfate, potassium persulfate, di-tert-butyl peroxide, and dibenzoyl peroxide;
preferably, the initiator is used in an amount of 0.1 to 0.5% of the total mass of the compounds 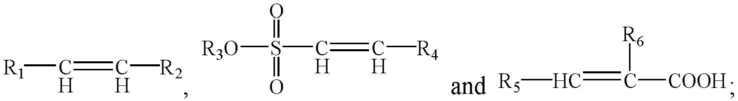
preferably, the compound 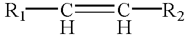 and polyethylene glycol are fed by one-time addition, and the compounds 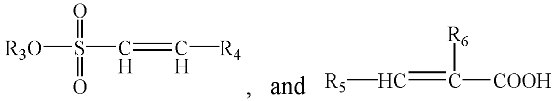 and the initiator are fed by dropwise addition in the form of an aqueous solution;
preferably, the dropwise addition is carried out for 0.5 to 1.5 h.

8. The preparation method according to claim 6, wherein, the reacting is carried out at a temperature of 60 to 120°C;
preferably, the reacting is carried out for 4 to 10 h.

9. Use of the non-fluorosurfactant according to any one of claims 1 to 5 in the preparation of a fluoropolymer by aqueous emulsion polymerization.

10. A preparation method for a fluoropolymer, **characterized in that** the preparation method comprises: subjecting a fluorine-containing monomer to aqueous emulsion polymerization in an aqueous phase comprising the non-fluorosurfactant according to any one of claims 1 to 5 to produce the fluoropolymer;
preferably, the fluorine-containing monomer is selected from one or more of tetrafluoroethylene, hexafluoropropylene, vinyl fluoride, vinylidene fluoride, trifluoroethylene, and chlorotrifluoroethylene;
preferably, the non-fluorosurfactant is used in an amount of 0.008 to 0.02% by mass of the fluoropolymer.

## Patentansprüche

1. Nichtfluortensid, **dadurch gekennzeichnet, dass** das Nichtfluortensid ein Polymer ist, dessen Hauptkette folgende Struktureinheiten enthält: 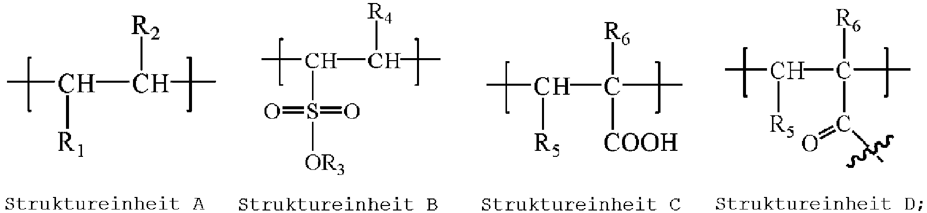
wobei die Struktureinheiten D über 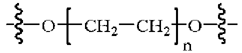 miteinander verbunden sind;
R₁, R₂, R₄, R₅, und R₆ jeweils unabhängig voneinander ein Wasserstoffatom oder eine C₁-C₃-Alkylgruppe sind;
R₃ ein Wasserstoffatom, NH₄⁺ oder ein einwertiges Metallion ist; und
n eine ganze Zahl von 10 bis 150 ist.

2. Nichtfluortensid nach Anspruch 1, wobei R₁, R₂, R₄, R₅ und R₆ jeweils unabhängig voneinander ein Wasserstoffatom, Methyl oder Ethyl sind.

3. Nichtfluortensid nach Anspruch 1 oder 2, wobei die Struktureinheit A, Struktureinheit B, Struktureinheit C und Struktureinheit D ein Molverhältnis von (1,0 bis 1,6):(1,2 bis 1,5): 1:(0,2 bis 0,6) aufweisen.

4. Nichtfluortensid nach einem der Ansprüche 1 bis 3, wobei das Nichtfluortensid ein zahlenmittleres Molekulargewicht von 200.000 bis 800.000 aufweist.

5. Nichtfluortensid nach einem der Ansprüche 1 bis 4, wobei das einwertige Metallion ein Natriumion oder ein Kaliumion ist.

6. Herstellungsverfahren für das Nichtfluortensid nach einem der Ansprüche 1 bis 5, **dadurch gekennzeichnet, dass** das Herstellungsverfahren die folgenden Schritte umfasst:
Umsetzen der Verbindungen 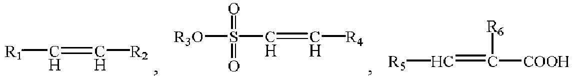 und Polyethylenglykol als Rohstoffe in Wasser in der Gegenwart eines Initiators, um das Nichtfluortensid herzustellen.

7. Herstellungsverfahren nach Anspruch 6, wobei der Initiator ausgewählt ist aus einem oder mehreren von Ammoniumpersulfat, Natriumpersulfat, Kaliumpersulfat, Di-tert-butylperoxid und Dibenzoylperoxid;
vorzugsweise der Initiator in einer Menge von 0,1 bis 0,5 % der Gesamtmasse der Verbindungen 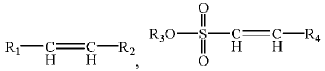 und 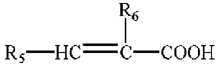 verwendet wird;
vorzugsweise die Verbindung 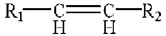 und das Polyethylenglykol durch einmalige Zugabe zugeführt werden und die Verbindungen 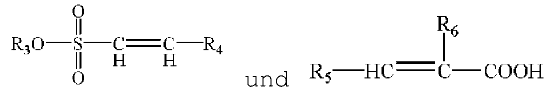 und der Initiator durch tropfenweise Zugabe in der Form einer wässrigen Lösung zugeführt werden;
vorzugsweise die tropfenweise Zugabe für 0,5 bis 1,5 h durchgeführt wird.

8. Herstellungsverfahren nach Anspruch 6, wobei das Umsetzen bei einer Temperatur von 60 bis 120 °C durchgeführt wird; vorzugsweise das Umsetzen für 4 bis 10 h durchgeführt wird.

9. Verwendung des Nichtfluortensids nach einem der Ansprüche 1 bis 5 bei der Herstellung eines Fluorpolymers durch wässrige Emulsionspolymerisation.

10. Herstellungsverfahren für ein Fluorpolymer, **dadurch gekennzeichnet, dass** das Herstellungsverfahren Folgendes umfasst: Unterziehen eines fluorhaltigen Monomers einer wässrigen Emulsionspolymerisation in einer wässrigen Phase, die das Nichtfluortensid nach einem der Ansprüche 1 bis 5 umfasst, um das Fluorpolymer herzustellen;
vorzugsweise das fluorhaltige Monomer ausgewählt ist aus einem oder mehreren von Tetrafluorethylen, Hexafluorpropylen, Vinylfluorid, Vinylidenfluorid, Trifluorethylen und Chlortrifluorethylen;
vorzugsweise das Nichtfluortensid in einer Menge von 0,008 bis 0,02 Massen-% des Fluorpolymers verwendet wird.

## Revendications

1. Tensioactif non fluoré, **caractérisé en ce que** le tensioactif non fluoré est un polymère contenant les unités structurales suivantes dans sa chaîne principale : 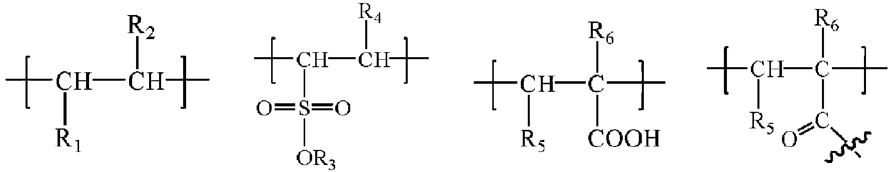
Unité structurale A Unité structurale B Unité structurale C Unité structurale D; dans lequel les unités structurales D sont reliées entre elles par l'intermédiaire de 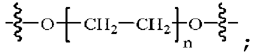
R₁, R₂, R₄, R₅ et R₆ représentent chacun indépendamment un atome d'hydrogène ou un groupe alkyle en C₁-C₃ ;
R₃ représente un atome d'hydrogène, NH₄⁺ ou un ion métallique monovalent ; et
n représente un nombre entier situé dans la plage allant de 10 à 150.

2. Tensioactif non fluoré selon la revendication 1, dans lequel R₁, R₂, R₄, R₅ et R₆ représentent chacun indépendamment un atome d'hydrogène, un méthyle ou un éthyle.

3. Tensioactif non fluoré selon la revendication 1 ou 2, dans lequel l'unité structurale A, l'unité structurale B, l'unité structurale C et l'unité structurale D présentent un rapport molaire de (1,0 à 1,6): (1,2 à 1,5): 1: (0,2 à 0,6).

4. Tensioactif non fluoré selon l'une quelconque des revendications 1 à 3, dans lequel le tensioactif non fluoré présente une masse moléculaire moyenne en nombre de 200 000 à 800 000.

5. Tensioactif non fluoré selon l'une quelconque des revendications 1 à 4, dans lequel l'ion métallique monovalent est un ion sodium ou un ion potassium.

6. Procédé de préparation du tensioactif non fluoré selon l'une quelconque des revendications 1 à 5, **caractérisé en ce que** le procédé de préparation comprend les étapes suivantes :
réaction des composés 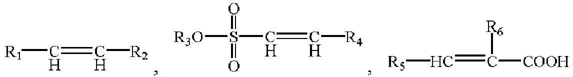 et du polyéthylène glycol comme matières premières dans l'eau en présence d'un initiateur, afin de produire le tensioactif non fluoré.

7. Procédé de préparation selon la revendication 6, dans lequel l'initiateur est choisi dans le groupe constitué par un ou plusieurs éléments parmi le persulfate d'ammonium, le persulfate de sodium, le persulfate de potassium, le peroxyde de di-tert-butyle et le peroxyde de dibenzoyle ;
de préférence, l'initiateur est utilisé en une proportion de 0,1 à 0,5 % de la masse totale des composés 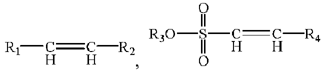 et 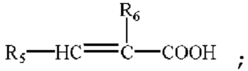
de préférence, le composé 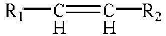 et le polyéthylène glycol sont introduits en une seule fois, et les composés 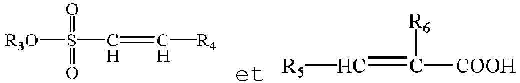 ainsi que l'initiateur sont introduits goutte à goutte sous la forme d'une solution aqueuse ;
de préférence, l'ajout goutte à goutte est effectué pendant 0,5 à 1,5 h.

8. Procédé de préparation selon la revendication 6, dans lequel la réaction est effectuée à une température de 60 à 120 °C ; de préférence, la réaction est effectuée pendant 4 à 10 h.

9. Utilisation du tensioactif non fluoré selon l'une quelconque des revendications 1 à 5 dans la préparation d'un fluoropolymère par polymérisation en émulsion aqueuse.

10. Procédé de préparation d'un fluoropolymère, **caractérisé en ce que** le procédé de préparation consiste à : soumettre un monomère contenant du fluor à une polymérisation en émulsion aqueuse dans une phase aqueuse comprenant le tensioactif non fluoré selon l'une quelconque des revendications 1 à 5 pour produire le fluoropolymère ;
de préférence, le monomère contenant du fluor est choisi dans le groupe constitué par un ou plusieurs éléments parmi le tétrafluoroéthylène, l'hexafluoropropylène, le fluorure de vinyle, le fluorure de vinylidène, le trifluoroéthylène et le chlorotrifluoroéthylène ;
de préférence, le tensioactif non fluoré est utilisé en une proportion de 0,008 à 0,02 % en masse du fluoropolymère.
